# EUROPEAN PATENT APPLICATION

(11) **EP 4 439 709 A1**
(43) Date of publication of application: **02.10.2024**
(21) Application number: 22898538.8
(22) Date of filing: 21.11.2022
(51) Int. Cl.: H01M 4/137, H01M 4/134, H01M 4/40, H01M 4/60, H01M 4/66, H01M 4/74, H01M 4/80

(54) **NON-AQUEOUS ELECTROLYTE SECONDARY BATTERY ELECTRODE COMPRISING POROUS METAL-CONTAINING CURRENT COLLECTOR AND ORGANOSULFUR-BASED ACTIVE MATERIAL, NON-AQUEOUS ELECTROLYTE SECONDARY BATTERY CONTAINING SAID ELECTRODE, AND ORGANOSULFUR-BASED ACTIVE MATERIAL FOR MANUFACTURING SAID ELECTRODE**

(30) Priority: 26.11.2021 JP 2021192244
(71) Applicant: ADEKA CORPORATION, Arakawa-ku Tokyo 116-8554 (JP)
(72) Inventor: KAKIAGE, Kenji, Tokyo 116-8554 (JP); YANO, Toru, Tokyo 116-8554 (JP)
(74) Representative: Müller-Boré & Partner Patentanwälte PartG mbB
(86) International application number: PCT/JP2022/043046
(87) International publication number: WO 2023/095755

(57) **Abstract**

This disclosure provides: an electrode for a non-aqueous electrolyte secondary battery including a collector containing a porous metal and an organosulfur active material; a non-aqueous electrolyte secondary battery including the electrode as a positive electrode or a negative electrode; and an organosulfur active material to be used for production of the electrode.

## Description

### Technical Field

The present invention relates to an electrode to be used for a non-aqueous electrolyte secondary battery, a non-aqueous electrolyte secondary battery using the electrode, and an organosulfur active material to be used for production of the electrode.

### Background Art

The characteristics of a non-aqueous electrolyte secondary battery depend on an electrode, a separator, an electrolyte, and the like serving as constituent members of the battery, and research and development have been actively made on the respective constituent members. For the electrode, an electrode active material is an important constituent member as well as a binder, a collector, and the like, and research and development have been actively made on the electrode active material.

An organosulfur active material such as sulfur-modified polyacrylonitrile is known as an electrode active material which has a high charge-discharge capacity and in which the charge-discharge capacity is less reduced along with repetition of charging and discharging (hereinafter sometimes referred to as "cycle characteristics") (see, for example, Patent Documents 1 to 4). The organosulfur active material has been used as a positive electrode active material, but may be used as a negative electrode active material depending on the positive electrode active material (see, for example, Patent Documents 5 and 6).

Meanwhile, a metal collector using a metal porous body having a three-dimensional network structure is known as the collector. It is known that an active material utilization rate and charge-discharge efficiency are improved in a non-aqueous electrolyte secondary battery using such metal collector (see, for example, Patent Documents 7 and 8).

### Citation List

### Patent Document

[Patent Document 1] WO 2010/044437 A1
[Patent Document 2] JP 2011-028948 A
[Patent Document 3] WO 2012/114651 A1
[Patent Document 4] WO 2013/001693 A1
[Patent Document 5] JP 2014-096326 A
[Patent Document 6] WO 2019/225588 A1
[Patent Document 7] JP 2002-203542 A
[Patent Document 8] JP 2012-174495 A

### Summary of Invention

### Technical Problem

It has been required that the battery characteristics of the non-aqueous electrolyte secondary battery be further improved. In particular, in a non-aqueous electrolyte secondary battery to be used in an electric vehicle or a hybrid car, a battery having a light weight, a high charge-discharge capacity, and satisfactory cycle characteristics has been required. In order to increase the charge-discharge capacity of an electrode, it is effective to increase the content of an electrode active material per unit area of the electrode, a so-called mass per unit area of the electrode active material. In the non-aqueous electrolyte secondary battery, a plurality of positive electrodes and negative electrodes are laminated on each other. When the mass per unit area is increased, the weight of the electrode is also increased, but the charge-discharge capacity thereof is increased, and thus the number of the electrodes can be reduced, leading to weight reduction of the non-aqueous electrolyte secondary battery.

In the non-aqueous electrolyte secondary battery such as a lithium ion secondary battery, the electrode active material is increased or decreased in volume by occluding or releasing a lithium ion through charging or discharging, and hence the thickness of an electrode mixture layer fluctuates. It is considered that an increase in strain in the electrode mixture layer caused by the fluctuation of the thickness of the electrode mixture layer along with charging and discharging is given as one cause for a reduction in the charge-discharge capacity of the battery. In order to increase the energy density of the battery, it is effective to increase the thickness of the electrode mixture layer to increase the mass per unit area of the electrode active material, but when the thickness of the electrode mixture layer is increased, the strain in the electrode mixture layer is also increased, and hence the cycle characteristics of the battery are liable to reduce. In particular, the organosulfur active material has a large change in volume along with charging and discharging as compared to any other electrode active material, and hence there has been a problem in that the mass per unit area thereof cannot be increased.

### Solution to Problem

The inventors of the present invention made extensive investigations, and as a result, found that, by using a metal porous body as a collector, there is obtained a non-aqueous electrolyte secondary battery having satisfactory cycle characteristics even when a mass per unit area of an organosulfur active material, which is an electrode active material, is increased. Thus, the inventors completed the present invention. That is, according to one embodiment of the present invention, there are provided an electrode for a non-aqueous electrolyte secondary battery comprising: a collector containing a porous metal; and an organosulfur active material, a non-aqueous electrolyte secondary battery comprising the electrode, and an organosulfur active material to be used for production of the electrode.

### Advantageous Effects of Invention

When the collector containing a porous metal disclosed herein is used, the electrode comprising the organosulfur active material as an electrode active material can be increased in mass per unit area of the electrode active material, and hence the non-aqueous electrolyte secondary battery having a high charge-discharge capacity and excellent cycle characteristics can be provided.

### Brief Description of Drawings

FIG. 1 is an exploded perspective view for schematically illustrating an electrode group 6 of a laminated non-aqueous electrolyte secondary battery 9.
FIG. 2 is an exploded perspective view for schematically illustrating the laminated non-aqueous electrolyte secondary battery 9.
FIG. 3 is an appearance plan view for schematically illustrating the laminated non-aqueous electrolyte secondary battery 9.

### Description of Embodiments

### [A. Electrode for Non-aqueous Electrolyte Secondary Battery]

First, an electrode for a non-aqueous electrolyte secondary battery of the present invention (hereinafter sometimes referred to as "electrode of the present invention") is described. The electrode of the present invention is an electrode comprising a collector and an organosulfur active material, and is characterized in that the above-mentioned collector is a collector containing a porous metal (hereinafter sometimes referred to as "porous metal collector" or "collector of the present invention").

Now, the respective configurations to be used in the electrode of the present invention are described in detail.

### [A-1. Collector]

The electrode of the present invention comprises the porous metal collector. In an electrode for a secondary battery, a surface of a collector may be subjected to surface treatment or may be coated with carbon or the like for improving its adhesiveness and electrical characteristics, and hence the collector of the present invention may comprise a surface treatment layer and/or a coating layer on the porous metal.

The shape of the collector of the present invention is not particularly limited, and may be any one of, for example, a mesh, a woven fabric, a nonwoven fabric, an embossed body, a punched body, an expand, and a foam, and a collector having a large thickness and a high void ratio is preferred because the organosulfur active material is supported in a void of the collector, and hence a mass per unit area of the organosulfur active material can be increased. The void ratio of the collector may be calculated from the formula described below. The "bulk volume of the collector" in the formula refers to a volume comprising the volume of the void of the collector, and specifically refers to the total sum of the volume of a material of the collector, the volume of the void in the collector, and the volume of a space of an uneven portion on a surface of the collector. The bulk volume of the collector is measured in conformity with the density measurement method of JIS P8118 (Paper and board-Determination of thickness, density and specific volume). In the above-mentioned JIS, measurement of the thickness is performed by applying a pressure of 100 kPa to a pressurization surface having a diameter of 16 mm with a micrometer, but when the void in the collector of the present invention is deformed, the collector of the present invention is interposed between two metal plates that each have a known thickness and are not deformed by the measurement pressure, and the measurement is performed at a pressure immediately before the void is deformed. Void ratio [%] of collector=(1 - (mass [g] of collector/(bulk volume [cm3] of collector×material density of collector))×100

The shape of the collector is preferably a three-dimensional network structure because the thickness is increased and the void ratio is increased. The "three-dimensional network structure" in the present invention refers to a structure having a network not only in a plane direction of the collector but also in a thickness direction thereof. Of the shapes of the collector, as a shape having the three-dimensional network structure, there are given, for example, a nonwoven fabric and a foam. Of those, a foam is preferred because an electrode having high physical strength is obtained even though the void ratio is high.

The thickness of the collector of the present invention is preferably from 0.1 mm to 10 mm, more preferably from 0.2 mm to 7 mm, still more preferably from 0.3 mm to 5 mm because charge-discharge efficiency becomes satisfactory. In the electrode for a secondary battery, an electrode active material may be supported on the collector, followed by pressing treatment, but the "thickness of the collector of the present invention" refers to the thickness of the collector used in the electrode, and does not refer to the thickness of a collector portion of the electrode after the pressing treatment.

The void ratio of the collector of the present invention is preferably from 80% to 99%, more preferably from 90% to 99% because the mass per unit area of the organosulfur active material is increased, and hence an electrode having high physical strength is obtained. The "void ratio of the collector of the present invention" refers to the void ratio of the collector used in the electrode, and does not refer to the void ratio of the collector portion of the electrode after the pressing treatment.

Specific examples of the porous metal in the collector of the present invention include titanium, aluminum, copper, nickel, stainless steel, and nickel-plated steel. Of those, aluminum is preferred because of its excellent conductivity and light weight, and the porous metal more preferably consists of aluminum. Accordingly, the collector of the present invention is preferably a porous aluminum collector.

The collector whose shape is a foam has a large number of pores. The pores each serve as the void, and the electrode active material is supported therein. When the shape of the collector of the present invention is a foam, in the case where the pores are excessively small, it is difficult to support the organosulfur active material, and in the case where the pores are excessively large, a charge-discharge capacity is reduced, and hence an average inner diameter of the pores is preferably from 50 µm to 1,000 µm, more preferably from 100 µm to 700 µm. The "average inner diameter of the pores" refers to a value obtained by averaging opening diameters (inner diameters of the pores) observed in a section of the collector of the present invention. The "opening diameter" refers to a distance with the maximum value of distances between two points that pass an inner periphery forming an opening. The average inner diameter of the pores is an average value obtained by observing at least 10 sites of the collector of the present invention and measuring the opening diameters of at least 10 adjacent pores per site. The section of the collector of the present invention may be measured by, for example, being magnified in a microphotograph or the like.

When the shape of the collector of the present invention is a foam, a communication pore is preferred because a slurry containing the organosulfur active material penetrates into the pore and is easily supported. The "communication pore" refers to a pore which is in a communication state with any other pore and in which at least one site thereof is an open pore, and a pore that is not in a communication state with the other pore may be referred to as "closed pore". The porous metal collector having communication pores and having a small number of closed pores can be obtained by, for example, forming a metal layer on surfaces of pores of a foamed resin such as polyurethane by a method such as plating, followed by decomposition and removal of the foamed resin. Exampled of such porous metal collector include CELMET (product name) and ALUMINUM-CELMET (product name) from Sumitomo Electric Industries, Ltd.

### [A-2. Organosulfur Active Material]

In the present invention, the "organosulfur active material" refers to a compound that can occlude and release a lithium ion, can be used as an electrode active material of a secondary battery, and contains carbon atoms and sulfur atoms. Examples of the organosulfur active material include polycarbon sulfide represented by the general formula (CSₓ)ₘ (where "x" represents a number from 0.5 to 2 and "m" represents a number of 4 or more), an organic polysulfide represented by the general formula (C₂S_{y})ₙ (where "y" represents a number from 2.5 to 50 and "n" represents a number 2 or more), and a thermally modified organosulfur compound. The thermally modified organosulfur compound is a compound obtained by subjecting a mixture of an organic compound and elemental sulfur to heat treatment under a non-oxidizing atmosphere, and examples thereof include sulfur-modified polyacrylonitrile, a sulfur-modified elastomer, a sulfur-modified polynuclear aromatic compound, sulfur-modified pitch, a polythienoacene compound, sulfur-modified polyether, a sulfur-modified polyamide medium, and a sulfur-modified aliphatic hydrocarbon oxide.

The sulfur-modified polyacrylonitrile is a compound obtained by subjecting polyacrylonitrile and elemental sulfur to heat treatment in a non-oxidizing atmosphere. The temperature of the heat treatment is not particularly limited, but is preferably from 350°C to 550°C. A sulfur content in the sulfur-modified polyacrylonitrile is not particularly limited, but is preferably from 25 mass% to 80 mass%.

Herein, a sulfur content in the organosulfur active material is represented as a concentration of sulfur with respect to the entire amount of the organosulfur active material.

The sulfur-modified elastomer is a compound obtained by subjecting a rubber, such as a natural rubber or an isoprene rubber, and elemental sulfur to heat treatment in a non-oxidizing atmosphere. The temperature of the heat treatment is not particularly limited, but is preferably from 250°C to 550°C. A sulfur content in the sulfur-modified elastomer is not particularly limited, but is preferably from 30 mass% to 85 mass%.

The sulfur-modified polynuclear aromatic compound is a compound obtained by subjecting a polynuclear aromatic compound, such as naphthalene or anthracene, and elemental sulfur to heat treatment in a non-oxidizing atmosphere. The temperature of the heat treatment is not particularly limited, but is preferably from 250°C to 550°C. A sulfur content in the sulfur-modified polynuclear aromatic compound is not particularly limited, but is preferably from 40 mass% to 85 mass%.

The sulfur-modified pitch is a compound obtained by subjecting a mixture of pitches and elemental sulfur to heat treatment in a non-oxidizing atmosphere. Examples of the pitches include petroleum pitch, coal pitch, mesophase pitch, asphalt, coal tar, coal tar pitch, organic synthesized pitch obtained by polycondensation of a polycondensed aromatic hydrocarbon compound, and organic synthesized pitch obtained by polycondensation of a heteroatom-containing polycondensed aromatic hydrocarbon compound. The pitches are a mixture of various compounds, and may contain nitrogen or sulfur in addition to carbon and hydrogen. The temperature of the heat treatment is not particularly limited, but is preferably from 300°C to 500°C. A sulfur content in the sulfur-modified pitch is not particularly limited, but is preferably from 30 mass% to 80 mass%.

The polythienoacene compound is a compound having a polythienoacene structure containing sulfur represented by the following general formula (1): 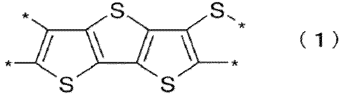 where the symbol "*" represents a bond.

The polythienoacene compound may be obtained by subjecting an aliphatic polymer compound having a linear structure, such as polyethylene, or a polymer compound having a thiophene structure, such as polythiophene, and elemental sulfur to heat treatment in a non-oxidizing atmosphere. The temperature of the heat treatment is not particularly limited, but is preferably from 300°C to 600°C. A sulfur content in the polythienoacene compound is preferably from 30 mass% to 80 mass% because a high charge-discharge capacity is obtained.

The sulfur-modified polyether is a compound obtained by subjecting a polyether compound, such as polyethylene glycol or polypropylene glycol, and elemental sulfur to heat treatment in a non-oxidizing atmosphere. The temperature of the heat treatment is not particularly limited, but is preferably from 250°C to 500°C. A sulfur content in the sulfur-modified polyether is not particularly limited, but is preferably from 40 mass% to 85 mass%.

The sulfur-modified polyamide is an organosulfur compound having a carbon skeleton derived from a polymer having an amide bond, and is specifically a compound obtained by subjecting a polymer of an aminocarboxylic acid compound and elemental sulfur, or a polymer of a polyamine compound and a polycarboxylic acid compound, and elemental sulfur to heat treatment in a non-oxidizing atmosphere. The temperature of the heat treatment is not particularly limited, but is preferably from 250°C to 600°C. A sulfur content in the sulfur-modified polyamide is preferably from 40 mass% to 70 mass% because a high charge-discharge capacity is obtained.

The sulfur-modified aliphatic hydrocarbon oxide is a compound obtained by subjecting an aliphatic hydrocarbon oxide, such as an aliphatic alcohol, an aliphatic aldehyde, an aliphatic ketone, an aliphatic epoxide, or a fatty acid, and elemental sulfur to heat treatment in a non-oxidizing atmosphere. The temperature of the heat treatment is not particularly limited, but is preferably from 300°C to 500°C. A sulfur content in the sulfur-modified aliphatic hydrocarbon oxide is not particularly limited, but is preferably from 45 mass% to 80 mass%.

The sulfur content in the organosulfur active material may be measured by, for example, elemental analysis with a CHN analyzer, which can analyze sulfur and oxygen (e.g., vario MICRO cube manufactured by Elementar).

Of the organosulfur active materials, a thermally modified organosulfur compound is preferred, and sulfur-modified polyacrylonitrile is more preferred because of its high charge-discharge capacity and excellent cycle characteristics. The sulfur content in the sulfur-modified polyacrylonitrile is preferably from 35 mass% to 65 mass%, more preferably from 45 mass% to 55 mass% because of its excellent cycle characteristics.

With regard to the particle diameter of the organosulfur active material, the average particle diameter thereof is preferably from 0.5 µm to 30 µm, more preferably from 1 µm to 20 µm, still more preferably from 2 um to 15 um because excellent battery performance is obtained. The particle diameter is a diameter on a volume basis, and in the present invention, the "average particle diameter" refers to a 50% particle diameter (D₅₀) measured by a laser diffraction light scattering method.

The mass per unit area of the organosulfur active material in the electrode of the present invention is preferably from 15 mg/cm² to 50 mg/cm², more preferably from 20 mg/cm² to 40 mg/cm² because the battery characteristics are sufficiently exhibited.

The "mass per unit area of the electrode active material" in an electrode comprising metal foil as a collector typically refers to the mass of the electrode active material per area of a portion containing an electrode active material of the electrode, but in the present invention, with regard to the electrode comprising the porous metal collector as the collector, the mass per unit area of the electrode active material is set to half of the mass of the electrode active material in the electrode with respect to the area of a portion containing the electrode active material in the area of the electrode calculated from its outer shape when the electrode is seen in plan view. This is because, although in the electrode comprising metal foil as a collector, only a surface containing the electrode active material may be used as the electrode, and hence one surface or both surfaces may serve as the electrode, in the electrode using the porous metal collector as in the electrode of the present invention, both the surfaces of the electrode may be used. When the electrode of the present invention is an electrode having a curved surface, such as a wound electrode, the mass per unit area is calculated as follows: a curved surface portion of the electrode is deformed into a flat surface, and then the electrode is seen in plan view.

In the electrode of the present invention, the collector of the present invention is used, and hence the mass per unit area of the organosulfur active material can be increased to a larger extent than that given when a collector of the metal foil is used. Accordingly, the charge-discharge capacity of the electrode can be increased. In a non-aqueous electrolyte secondary battery, a large number of positive electrodes and negative electrodes are typically alternately laminated in order to obtain a high output. In the electrode of the present invention, the weight per one sheet of the electrode is increased because the mass per unit area of the active material is increased, but the number of the electrodes to be used can be reduced because the charge-discharge capacity is increased. Accordingly, the weight of the non-aqueous electrolyte secondary battery can be reduced.

### [A-3. Slurry]

As a method of producing the electrode of the present invention, a method involving mixing an organosulfur active material and a solvent to provide a slurry, and applying the slurry onto the collector of the present invention may be used. The organosulfur active material may be supported alone onto the collector of the present invention, but is preferably supported together with a conductive assistant and a binder because conductivity and adhesiveness to the collector are improved. Accordingly, when the electrode of the present invention is produced by the method involving applying the slurry, the conductive assistant and the binder are preferably mixed to the slurry containing the organosulfur active material. In the electrode, a layer containing the conductive assistant, the binder, and the like in addition to the electrode active material may be referred to as "electrode mixture layer".

### [A-3-1. Conductive Assistant]

A conductive assistant known as a conductive assistant for an electrode may be used as the conductive assistant to be used in the present invention, and specific examples thereof include: carbon materials, such as carbon black, ketjen black, acetylene black, channel black, furnace black, lamp black, thermal black, a carbon nanotube, a vapor grown carbon fiber (VGCF), graphene, fullerene, needle coke, and graphite; metal powders, such as aluminum powder, nickel powder, and titanium powder; conductive metal oxides, such as zinc oxide and titanium oxide; and sulfides, such as La₂S₃, S₂S₃, Ce₂S₃, and TiS₂.

With regard to the particle diameter of the conductive assistant, the average particle diameter thereof is preferably from 0.0001 µm to 30 µm, more preferably from 0.01 um to 20 um because the conductivity is improved. The content of the conductive assistant in the electrode mixture layer is preferably from 0.01 mass% to 15 mass%, more preferably from 0.2 mass% to 10 mass%, still more preferably from 1 mass% to 5 mass% with respect to the mass of the electrode mixture layer because the conductivity is improved.

### [A-3-2. Binder]

A binder known as a binder for an electrode may be used as the binder. Examples thereof include a styrene-butadiene rubber, a butadiene rubber, polyethylene, polypropylene, polyamide, polyamide imide, polyimide, polyacrylonitrile, polyurethane, polyvinylidene fluoride, polytetrafluoroethylene, an ethylenepropylene-diene rubber, a fluorine rubber, a styrene-acrylic acid ester copolymer, an ethylene-vinyl alcohol copolymer, an acrylonitrile butadiene rubber, a styrene-isoprene rubber, polymethyl methacrylate, polyacrylate, polyvinyl alcohol, polyvinyl ether, carboxymethyl cellulose, sodium carboxymethyl cellulose, methyl cellulose, a cellulose nanofiber, polyethylene oxide, starch, polyvinylpyrrolidone, polyvinyl chloride, and polyacrylic acid.

Of those, an aqueous binder is preferred as the binder because the aqueous binder has a low environmental load and hardly causes elution of sulfur, and a styrene-butadiene rubber, sodium carboxymethyl cellulose, and polyacrylic acid are particularly preferred. The binders may be used alone or in combination thereof.

### [A-3-3. Solvent]

The solvent for preparing the slurry may be any solvent that has moderate volatility, and that can disperse the organosulfur electrode active material, the conductive assistant, the binder, and the like without reacting therewith, and examples thereof include propylene carbonate, ethylene carbonate, diethyl carbonate, dimethyl carbonate, ethylmethyl carbonate, 1,2-dimethoxyethane, 1,2-diethoxyethane, acetonitrile, propionitrile, tetrahydrofuran, 2-methyltetrahydrofuran, 1,4-dioxane, 1,3-dioxolane, nitromethane, N-methylpyrrolidone, N,N-dimethylformamide, dimethylacetamide, methyl ethyl ketone, cyclohexanone, methyl acetate, methyl acrylate, diethyltriamine, N,N-dimethylaminopropylamine, polyethylene oxide, tetrahydrofuran, dimethyl sulfoxide, sulfolane, γ-butyrolactone, water, and an alcohol. The usage amount of the solvent may be adjusted in accordance with an application method to be selected at the time of the application of the slurry. In the case of, for example, application by a die coater method, the amount of the solvent is preferably from 10 parts by mass to 300 parts by mass, more preferably from 20 parts by mass to 200 parts by mass with respect to 100 parts by mass of the total amount of the organosulfur electrode active material, the conductive assistant, and the binder.

### [A-3-4. Another Component]

The slurry may further contain another component. Examples of the other component include a viscosity modifier, a reinforcing material, an antioxidant, and a penetration enhancer.

A method of preparing the slurry is not particularly limited, but may be, for example, a method involving using an ordinary ball mill, a sand mill, a bead mill, a pigment disperser, a mortar machine, an ultrasonic disperser, a homogenizer, a rotation/revolution mixer, a planetary mixer, Fill Mix, or Jet Paster.

A method of applying the slurry onto the porous metal collector is not particularly limited, and various methods, such as a die coater method, a comma coater method, a curtain coater method, a spray coater method, a gravure coater method, a flexo coater method, a knife coater method, a doctor blade method, a reverse roll method, a brush coating method, and an immersion method, may each be used.

When the slurry is applied by the immersion method, after the porous metal collector is immersed in the slurry, a gas in the porous metal collector may be removed by ultrasonic irradiation or pressure reduction to make it easier for the slurry to penetrate into the pores.

A method of drying the slurry having been applied onto the porous metal collector is not particularly limited, and various methods, such as drying with warm air, hot air, or low-humidity air, vacuum drying, still standing in a heating furnace or the like, irradiation with far infrared rays, infrared rays, electron beams, or the like, may each be used. With the drying, a volatile component such as the solvent volatilizes from the application film of the slurry, and thus the electrode mixture layer is formed on the porous metal collector. The electrode mixture layer may be formed by performing the application and drying once, or may be formed by repeating the application and drying of the slurry. The electrode is preferably thin for downsizing and weight reduction of the battery, and hence the electrode of the present invention is preferably subjected to the pressing treatment after the end of the drying of the slurry.

### [B. Non-aqueous Electrolyte Secondary Battery]

The electrode of the present invention can be preferably used as an electrode of a non-aqueous electrolyte secondary battery. In general, the non-aqueous electrolyte secondary battery comprises a positive electrode, a negative electrode, a non-aqueous electrolyte, and a separator. The electrode of the present invention may be used as the positive electrode of the non-aqueous electrolyte secondary battery, or may be used as the negative electrode thereof. Examples of the non-aqueous electrolyte secondary battery include alkali metal secondary batteries, such as a lithium ion secondary battery, a sodium ion secondary battery, and a potassium ion secondary battery. The non-aqueous electrolyte secondary battery in which the electrode of the present invention is used is preferably a lithium ion secondary battery or a sodium ion secondary battery, particularly preferably a lithium ion secondary battery because a high charge-discharge capacity and excellent cycle characteristics are obtained.

### [B-1. Lithium Ion Secondary Battery (Positive Electrode)]

First, the case in which the electrode of the present invention is used as a positive electrode of a lithium ion secondary battery is described. The organosulfur active material serving as the electrode active material of the electrode of the present invention is free of lithium, and hence, when an electrode active material of a negative electrode (negative electrode active material) is free of lithium, predoping treatment of inserting a lithium metal into the positive electrode of the present invention is required. Even when the negative electrode active material contains lithium, predoping with lithium is preferably performed in order to stably activate the secondary battery. As a method of predoping the electrode of the present invention with lithium, there are given, for example: an electrolysis doping method in which a half battery is assembled by using metal lithium as a counter electrode of the electrode of the present invention, and the electrode is electrochemically doped with lithium; and a diffusion doping method in which metal lithium foil is bonded to the electrode of the present invention, and then the electrode is left in a non-aqueous electrolytic solution and doped with lithium through utilization of diffusion of lithium into the electrode.

### [B-1-1. Negative Electrode]

When the electrode of the present invention is used as the positive electrode of the lithium ion secondary battery, the negative electrode may be produced by a known method. The negative electrode having an electrode mixture layer formed on a collector may be produced by, for example, applying a slurry obtained by mixing a blend, which contains the negative electrode active material, a conductive assistant, and a binder, in a solvent onto the collector, and drying the slurry.

Examples of the negative electrode active material include natural graphite, artificial graphite, non-graphitizable carbon, graphitizable carbon, lithium, a lithium alloy, silicon, a silicon alloy, silicon oxide, tin, a tin alloy, tin oxide, phosphorus, germanium, indium, copper oxide, antimony sulfide, titanium oxide, iron oxide, manganese oxide, cobalt oxide, nickel oxide, lead oxide, ruthenium oxide, tungsten oxide, and zinc oxide, and as well, composite oxides, such as LiVO₂, Li₂VO₄, and Li₄Ti₅O₁₂.

The conductive assistant, the binder, and the solvent given as examples in the [A-3. Slurry] section may be used as the conductive assistant, the binder, and the solvent. A method of preparing the slurry, a method of applying the slurry onto the collector, and a method of drying the slurry may be performed in accordance with the methods given as examples in the [A-3. Slurry] section.

In this case, the collector may be prepared by using a conductive material, such as titanium, a titanium alloy, aluminum, an aluminum alloy, copper, nickel, stainless steel, nickel-plated steel, or carbon. Examples of the shape of the collector include a foil shape, a plate shape, and a mesh shape, and the collector may be any one of a porous collector and a nonporous collector. A metal-based negative electrode active material, such as lithium, a lithium alloy, tin, or a tin alloy, has high conductivity, and hence the metal foil itself may be adopted as the negative electrode, or the metal foil may be bonded to the collector to provide the negative electrode. A lithium metal-based active material, such as lithium or a lithium alloy, is preferred as the negative electrode active material because the material has a high charge-discharge capacity, and a lithium-based metal foil itself is preferably adopted as the negative electrode because the weight of the battery can be reduced.

In the related-art electrode comprising an organosulfur active material as an electrode active material, metal foil, such as aluminum foil or copper foil, has been used as a collector. In a lithium ion secondary battery comprising such electrode as a positive electrode and lithium metal foil as a negative electrode, it has been required to use lithium metal foil having a thickness of at least 100 um in order to obtain high cycle characteristics. In the electrode of the present invention, although the mass per unit area of the electrode active material is increased by using the porous metal collector as the collector, and hence the charge-discharge capacity is increased, the thickness of the lithium metal foil of the negative electrode can be reduced as compared to that in the case in which the metal foil is used as the collector. In order to reduce the weight of the lithium ion secondary battery, a negative electrode having a smaller weight is preferably used, and hence, in a lithium ion secondary battery comprising the electrode of the present invention as the positive electrode and the lithium-based metal foil as the negative electrode, the thickness of the lithium-based metal foil is preferably from 1 µm to 200 µm, more preferably from 2 µm to 100 µm, still more preferably from 3 µm to 90 µm.

### [B-1-2. Non-aqueous Electrolyte]

Examples of the non-aqueous electrolyte include: a liquid electrolyte obtained by dissolving a supporting electrolyte in an organic solvent; a gel polymer electrolyte in which a supporting electrolyte is dissolved in an organic solvent and gelation is performed with a polymer; a pure polymer electrolyte which is free of an organic solvent and in which a supporting electrolyte is dispersed in a polymer; and an inorganic solid electrolyte. Of those, a liquid electrolyte is preferred because the non-aqueous electrolyte easily penetrates into even an inside of the electrode of the present invention.

Examples of the supporting electrolyte to be used in the liquid electrolyte or the gel polymer electrolyte include LiPF₆, LiBF₄, LiAsF₆, LiCF₃SO₃, LiCF₃CO₂, LiN(CF₃SO₂)₂, LiN(C₂F₅SO₂)₂, LiN(SO₂F)₂, LiC(CF₃SO₂)₃, LiB(CF₃SO₃)₄, LiB(C₂O₄)₂, LiBF₂(C₂O₄), LiSbF₆, LiSiF₅, LiSCN, LiClO₄, LiCl, LiF, LiBr, LiI, LiAlF₄, LiAlCl₄, LiPO₂F₂, and derivatives thereof. The content of the electrolyte in the liquid electrolyte or the gel polymer electrolyte is preferably from 0.5 mol/L to 7 mol/L, more preferably from 0.8 mol/L to 1.8 mol/L.

Examples of the electrolyte to be used in the pure polymer electrolyte include LiN(CF₃SO₂)₂, LiN(C₂F₅SO₂)₂, LiN(SO₂F)₂, LiC(CF₃SO₂)₃, LiB(CF₃SO₃)₄, and LiB(C₂O₄)₂.

Examples of the inorganic solid electrolyte include a sulfide-based solid electrolyte and an oxide-based solid electrolyte. The inorganic solid electrolyte may be a crystalline material or an amorphous material.

Examples of the sulfide-based solid electrolyte may include a Li₂S-P₂S₅-based compound, a Li₂S-SiS₂-based compound, a Li₂S-GeS₂-based compound, a Li₂S-B₂S₃-based compound, a Li₂S-P₂S₃-based compound, LiI-Si₂S-P₂S₅, LiI-Li₂S-P₂O₃, LiI-Li₃PO₄-P₂S₅, and Li₁₀GeP₂S₁₂. The expression "-based compound" referring to the sulfide-based solid electrolyte is used as a general name for solid electrolytes each mainly containing a raw material, such as "Li₂S" or "P₂S₅", described before the term "-based compound." For example, the Li₂S-P₂S₅-based compound encompasses a solid electrolyte, which contains Li₂S and P₂S₅, and further contains any other raw material. In addition, the Li₂S-P₂S₅-based compound encompasses a solid electrolyte in which the mixing ratios of Li₂S and P₂S₅ are different from each other.

Examples of the Li₂S-P₂S₅-based compound may include Li₂S-P₂S₅, Li₂S-P₂S₅-LiI, Li₂S-P₂S₅-LiCl, Li₂S-P₂S₅-LiBr, Li₂S-P₂S₅-Li₂O, Li₂S-P₂S₅-Li₂O-LiI, and Li₂S-P₂S₅-ZₘSₙ (where Z represents Ge, Zn, or Ga, and "m" and "n" each represent a positive number).

Examples of the Li₂S-SiS₂-based compound may include Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-SiS₂-Li₃PO₄, Li₂S-SiS₂-Li₂SO₄, and Li₂S-SiS₂-LiₓMO_{y} (where M represents P, Si, Ge, B, Al, Ga, or In, and "x" and "y" each represent a positive number).

Examples of the Li₂S-GeS₂-based compound may include Li₂S-GeS₂ and Li₂S-GeS₂-P₂S₅.

Examples of the oxide-based solid electrolyte include oxides, such as a perovskite-type oxide, a nasicon-type oxide, a lisicon-type oxide, a garnet-type oxide, and β-alumina.

Examples of the perovskite-type oxide include: a Li-La-Ti-based perovskite-type oxide represented like LiₐLa₁₋ₐTiO₃ or the like; a Li-La-Ta-based perovskite-type oxide represented like Li_{b}La_{1-b}TaO₃ or the like; and a Li-La-Nb-based perovskite-type oxide represented like Li_{c}La_{1-c}NbO₃ or the like (where 0<a<1, 0<b<1, and 0<c<1).

The nasicon-type oxide is, for example, an oxide represented by LiₑX_{f}Y_{g}PₕOⱼ, the oxide using a crystal typified by Li_{d+1}Al_{d}Ti_{2-d}(PO₄)₃ or the like as an oikocryst (where X represents B, Al, Ga, In, C, Si, Ge, Sn, Sb, or Se, Y represents Ti, Zr, Ge, In, Ga, Sn, or Al, 0≤d≤1, and "e", "f", "g", "p", "h", and "j" each represent a positive number). The nasicon-type oxide is specifically, for example, LiTi₂(PO₄)₃.

The lisicon-type oxide is, for example, an oxide represented by Li₄XO₄-Li₃YO₄ (where X represents Si, Ge, or Ti, and Y represents P, As, or V).

Examples of the garnet-type oxide include a Li-La-Zr-based oxide typified by Li₇La₃Zr₂O₁₂ or the like, and a derivative thereof.

Examples of the organic solvent to be used in the liquid electrolyte or the gel polymer electrolyte include a saturated cyclic carbonate compound, a saturated cyclic ester compound, a sulfoxide compound, a sulfone compound, an amide compound, a saturated chain carbonate compound, a chain ether compound, a cyclic ether compound, and a saturated chain ester compound.

Examples of the saturated cyclic carbonate compound include ethylene carbonate, 1,2-propylene carbonate, 1,3-propylene carbonate, 1,2-butylene carbonate, 1,3-butylene carbonate, and 1,1-dimethylethylene carbonate.

Examples of the saturated cyclic ester compound include γ-butyrolactone, γ-valerolactone, γ-caprolactone, δ-hexanolactone, and δ-octanolactone. Examples of the sulfoxide compound include dimethyl sulfoxide, diethyl sulfoxide, dipropyl sulfoxide, diphenyl sulfoxide, and thiophene.

Examples of the sulfone compound include dimethylsulfone, diethylsulfone, dipropylsulfone, diphenylsulfone, sulfolane (also referred as tetramethylene sulfone), 3-methylsulfolane, 3,4-dimethylsulfolane, 3,4-phenylmethylsulfolane, sulfolene, 3-methylsulfolene, 3-ethylsulfolene, and 3-bromomethylsulfolene. Of those, sulfolane and tetramethylsulfolane are preferred.

Examples of the saturated chain carbonate compound include dimethyl carbonate, ethyl methyl carbonate, diethyl carbonate, ethyl butyl carbonate, methyl-t-butyl carbonate, diisopropyl carbonate, and t-butyl propyl carbonate.

Examples of the chain ether compound or the cyclic ether compound include: glymes, such as dimethoxyethane, ethoxymethoxyethane, diethoxyethane, diethylene glycol dimethyl ether, triethylene glycol dimethyl ether, and tetraethylene glycol dimethyl ether; and tetrahydrofuran, dioxolane, dioxane, 1,2-bis(methoxycarbonyloxy)ethane, 1,2-bis(ethoxycarbonyloxy)ethane, 1,2-bis(ethoxycarbonyloxy)propane, ethylene glycol bis(trifluoroethyl) ether, propylene glycol bis(trifluoroethyl) ether, ethylene glycol bis(trifluoromethyl) ether, and diethylene glycol bis(trifluoroethyl) ether.

The saturated chain ester compound is preferably a monoester compound or a diester compound having 2 to 8 carbon atoms in total in a molecule thereof. Specific examples of the compound include methyl formate, ethyl formate, methyl acetate, ethyl acetate, propyl acetate, isobutyl acetate, butyl acetate, methyl propionate, ethyl propionate, methyl butyrate, methyl isobutyrate, methyl trimethylacetate, ethyl trimethylacetate, methyl malonate, ethyl malonate, methyl succinate, ethyl succinate, methyl 3-methoxypropionate, ethyl 3-methoxypropionate, ethylene glycol diacetyl, and propylene glycol diacetyl.

Other than the foregoing, acetonitrile, propionitrile, nitromethane, derivatives thereof, and various ionic liquids may each also be used as the organic solvent used for preparation of the non-aqueous electrolyte.

Examples of the polymer to be used in the gel polymer electrolyte include polyethylene oxide, polypropylene oxide, polyvinyl chloride, polyacrylonitrile, polymethyl methacrylate, polyethylene, polyvinylidene fluoride, and polyhexafluoropropylene.

As a fluororesin serving as a polymer-based solid electrolyte, there are given, for example, polymers each containing, as a structural unit, vinylidene fluoride, hexafluoropropylene, and tetrafluoroethylene, and derivatives thereof. Specifically, there are given, for example: homopolymers, such as polyvinylidene fluoride, polyhexafluoropropylene, and polytetrafluoroethylene; and a copolymer of vinylidene fluoride and hexafluoropropylene.

The polymer-based solid electrolyte may contain a supporting electrolyte (salt). The supporting electrolyte is, for example, a salt containing a lithium ion. Specific examples thereof include supporting electrolytes that are typically used in the field of the present invention, such as LiClO₄, LiBF₄, LiPF₆, LiAlCl₄, LiSbF₆, LiSCN, LiCF₃SO₃, LiCF₃CO₂, LiAsF₆, LiB₁₀Cl₁₀, a lower aliphatic lithium carboxylate, LiCl, LiBr, LiI, LiBCl₄, boric acid salts, and imide salts.

As a complex hydride-based solid electrolyte, there are given, for example, Li(CB₉H₁₀), Li(CB₁₁H₁₂), Li₂(B₁₂H₁₂), Li(BH₄), LiBH₄-LiI, Li(NH₂), Li(AlH₄), Li₃(AlH₆), LiBH₄-Li(NH₂), Li(BH₄)-Li(NH₂), Li(CB₉H₁₀)-Li(CB₁₁H₁₂), Li(BH₄)-KI, Li(BH₄)-P₂I₄, Li(BH₄)-P₂S₅, Li₂(NH₂), Li(BH₄)-GdCl₃, Li(BH₄)-NaI, and Li(BH₄)-Li(NH₂).

As a phosphoric acid-based solid electrolyte, there are given, for example, Li₃PO₄, LiPON, and Li_{2.9}PO_{3.3}N_{0.46}. As an organic molecular crystal-based solid electrolyte, there is given, for example, Li{N(SO₂F)₂}-NCCH₂CH₂CN.

With regard to the particle diameter of the solid electrolyte, the average particle diameter (D₅₀) thereof is preferably from 0.1 um to 50.0 um because a dense layer can be formed.

### [B-1-3. Separator]

When the non-aqueous electrolyte of the non-aqueous electrolyte secondary battery is the liquid electrolyte, a separator is preferably interposed between the positive electrode and the negative electrode for prevention of short circuit. For example, a microporous polymer film generally used for the non-aqueous electrolyte secondary battery, or a nonwoven fabric may be used as the separator without particular limitations. Examples of the film include films consisting of polymer compounds containing, as main components, for example, any of polyethylene, polypropylene, polyvinylidene fluoride, polyvinylidene chloride, polyacrylonitrile, polyacrylamide, polytetrafluoroethylene, polysulfone, polyethersulfone, polycarbonate, polyamide, polyimide, polyethers, such as polyethylene oxide and polypropylene oxide, various celluloses, such as carboxymethyl cellulose and hydroxypropyl cellulose, and poly(meth)acrylic acid and various esters thereof, derivatives thereof, copolymers thereof, and mixtures thereof. Those films may each be coated with a ceramic material, such as alumina or silica, magnesium oxide, an aramid resin, or polyvinylidene fluoride.

When the polymer gel electrolyte, the pure polymer electrolyte, or the inorganic solid electrolyte is used as the non-aqueous electrolyte, the separator may not be incorporated.

### [B-2. Lithium Ion Secondary Battery (Negative Electrode)]

Next, the case in which the electrode of the present invention is used as the negative electrode of the lithium ion secondary battery is described. Although the predoping treatment with lithium is performed in the case in which the electrode of the present invention is used as the positive electrode of the lithium ion secondary battery, the predoping treatment is not required in the case in which the electrode of the present invention is used as the negative electrode.

### [B-2-1. Positive Electrode]

As a positive electrode active material of the positive electrode in the case in which the electrode of the present invention is used as the negative electrode of the lithium ion secondary battery, there are given, for example, a composite oxide of lithium and a transition metal, a lithium-containing transition metal phosphate compound, and a lithium-containing silicate compound.

A transition metal in the composite oxide of lithium and a transition metal is preferably, for example, vanadium, titanium, chromium, manganese, iron, cobalt, nickel, or copper. Specific examples of the composite oxide of lithium and a transition metal include: composite oxides of lithium and cobalt such as LiCoO₂; composite oxides of lithium and nickel such as LiNiO₂; composite oxides of lithium and manganese, such as LiMnO₂, LiMn₂O₄, and Li₂MnO₃; and compounds obtained by partially substituting primary transition metal atoms of these composite oxides of lithium and transition metals with another metal, such as aluminum, titanium, vanadium, chromium, manganese, iron, cobalt, lithium, nickel, copper, zinc, magnesium, gallium, or zirconium. Specific examples of the composite oxides of lithium and transition metals having primary transition metal atoms partially substituted with another metal include Li_{1.1}Mn_{1.8}Mg_{0.1}O₄, Li_{1.1}Mn_{1.85}Al_{0.05}O₄, LiNi_{0.5}Co_{0.2}Mn_{0.3}O₂, LiNi_{0.8}Co_{0.1}Mn_{0.1}O₂, LiNi_{0.5}Mn_{0.5}O₂, LiNi_{0.8}CO_{0.17}Al_{0.03}O₂, LiNi_{0.80}Co_{0.15}Al_{0.05}O₂, LiNi_{1/3}Co_{1/3}Mn_{1/3}O₂, LiNi_{0.6}Co_{0.2}Mn_{0.2}O₂, LiMn_{1.8}Al_{0.2}O₄, LiNi_{0.5}Mn_{1.5}O₄, and Li₂MnO₃-LiMO₂ (M=Co, Ni, or Mn) .

A transition metal in the lithium-containing transition metal phosphate compound is preferably vanadium, titanium, manganese, iron, cobalt, nickel, or the like, and specific examples of the compound include: iron phosphate compounds, such as LiFePO₄ and LiMnₓFe₁₋ₓPO₄ (0<x<1); iron sulfate compounds such as LiFeSO₄; cobalt phosphate compounds such as LiCoPO₄; compounds obtained by partially substituting primary transition metal atoms of these lithium-containing transition metal phosphate compounds with another metal, such as aluminum, titanium, vanadium, chromium, manganese, iron, cobalt, lithium, nickel, copper, zinc, magnesium, gallium, zirconium, or niobium; and vanadium phosphate compounds such as Li₃V₂(PO₄)₃. An example of the lithium-containing silicate compound is Li₂FeSiO₄.

### [B-2-2. Non-aqueous Electrolyte]

As a non-aqueous electrolyte in the case in which the electrode of the present invention is used as the negative electrode of the lithium ion secondary battery, there are given, for example, the non-aqueous electrolytes described in the [B-1-2. Non-aqueous Electrolyte] section.

### [B-2-3. Separator]

As a separator in the case in which the electrode of the present invention is used as the negative electrode of the lithium ion secondary battery, there are given, for example, the separators described in the [B-1-3. Separator] section.

### [B-3. Sodium Ion Secondary Battery (Positive Electrode)]

The case in which the electrode of the present invention is used as a positive electrode of a sodium ion secondary battery is described. The organosulfur active material serving as the electrode active material of the electrode of the present invention is free of sodium, and hence, when a negative electrode active material of a negative electrode is free of sodium, predoping treatment of inserting a sodium metal into the positive electrode of the present invention is required. Even when the negative electrode active material contains sodium, predoping with sodium is preferably performed in order to stably activate the secondary battery. A method of predoping the electrode of the present invention with sodium may be performed by replacing the lithium metal in the doping method with lithium described in the [B-1. Lithium Ion Secondary Battery (Positive Electrode)] section with a sodium metal.

Examples of the negative electrode active material of the negative electrode include natural graphite, artificial graphite, non-graphitizable carbon, graphitizable carbon, sodium, a sodium alloy, silicon, a silicon alloy, silicon oxide, tin, a tin alloy, tin oxide, phosphorus, germanium, indium, copper oxide, antimony sulfide, titanium oxide, iron oxide, manganese oxide, cobalt oxide, nickel oxide, lead oxide, ruthenium oxide, tungsten oxide, and zinc oxide, and as well, composite oxides, such as NaVO₂, Na₂VO₄, and Na₄Ti₅O₁₂.

The conductive assistant, the binder, and the solvent given as examples in the [A-3. Slurry] section may be used as a conductive assistant, a binder, and a solvent of the negative electrode. A method of preparing a slurry, a method of applying the slurry onto a collector, and a method of drying the slurry may also be performed in accordance with the methods given as examples in the [A-3. Slurry] section, and the collector described in the [B-1-1. Negative Electrode] section may be used as the collector.

A non-aqueous electrolyte obtained by replacing the lithium atom of each of the non-aqueous electrolytes given as examples in the [B-1-2. Non-aqueous Electrolyte] section with a sodium atom may be used as the non-aqueous electrolyte. The separator described in the [B-1-3. Separator] section may be used as a separator.

### [B-4. Sodium Ion Secondary Battery (Negative Electrode)]

Next, the case in which the electrode of the present invention is used as the negative electrode of the sodium ion secondary battery is described. Although the predoping treatment with sodium is performed in the case in which the electrode of the present invention is used as the positive electrode of the sodium ion secondary battery, the predoping treatment is not required in the case in which the electrode of the present invention is used as the negative electrode.

As a positive electrode active material of the positive electrode, there are given, for example, positive electrode active materials obtained by replacing the lithium atom in each of the positive electrode active materials of a lithium ion battery given as examples in the [B-2-1. Positive Electrode] section with a sodium atom.

The conductive assistant, the binder, and the solvent given as examples in the [A-3. Slurry] section may be used as a conductive assistant, a binder, and a solvent of the positive electrode. A method of preparing a slurry, a method of applying the slurry onto the collector, and a method of drying the slurry may also be performed in accordance with the methods given as examples in the [A-3. Slurry] section, and the collector described in the [B-1-1. Negative Electrode] section may be used as the collector.

A non-aqueous electrolyte obtained by replacing the lithium atom of each of the non-aqueous electrolytes given as examples in the [B-1-2. Non-aqueous Electrolyte] section with a sodium atom may be used as the non-aqueous electrolyte. The separator described in the [B-1-3. Separator] section may be used as a separator.

### [B-5. Shape of Non-aqueous Electrolyte Secondary Battery]

The shape of the non-aqueous electrolyte secondary battery in which the electrode of the present invention is used is not particularly limited, and the battery may be provided as batteries having various shapes, such as a coin-type battery, a cylindrical battery, a rectangular battery, and a laminated battery. A metal container or a laminated film may be used as an outer packaging member for the battery. The thickness of the outer packaging member is generally 0.5 mm or less, preferably 0.3 mm or less. Examples of the shape of the outer packaging member include a flat shape (thin shape), a rectangular shape, a cylindrical shape, a coin shape, and a button shape.

The metal container is, for example, a container formed from stainless steel, aluminum, or an aluminum alloy. The aluminum alloy is preferably an alloy containing an element, such as magnesium, zinc, or silicon. When the content of a transition metal, such as iron, copper, nickel, or chromium, in aluminum or the aluminum alloy is set to 1% or less, the long-term reliability and heat-radiating property of the container under a high-temperature environment can be drastically improved.

A multi-layer film comprising a metal layer between resin films may be used as the laminated film. The metal layer is preferably aluminum foil or aluminum alloy foil for weight saving. For example, a polymer material, such as polypropylene, polyethylene, nylon, or polyethylene terephthalate, may be used for the resin film. The laminated film may be sealed through thermal fusion to form the outer packaging member.

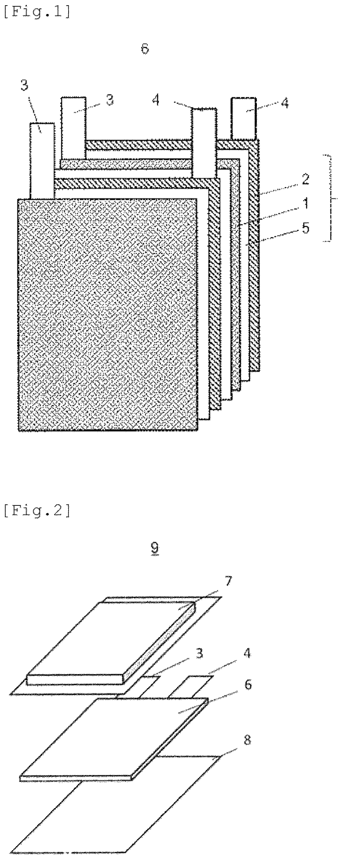

An example of a laminated non-aqueous electrolyte secondary battery using the electrode of the present invention is shown in each of FIG. 1 to FIG. 3.

FIG. 1 is an exploded perspective view for schematically illustrating an electrode group 6 of a laminated non-aqueous electrolyte secondary battery 9. Examples to be described later are described by using a laminated non-aqueous electrolyte secondary battery, but the present invention is not limited thereto. The electrode group 6 has, for example, a structure in which a sheet-shaped positive electrode 1, a sheet-shaped negative electrode 2, and a sheet-shaped separator 5 for partitioning the positive electrode 1 and the negative electrode 2 are alternately laminated. The electrode group comprises a positive electrode terminal 3 and a negative electrode terminal 4.

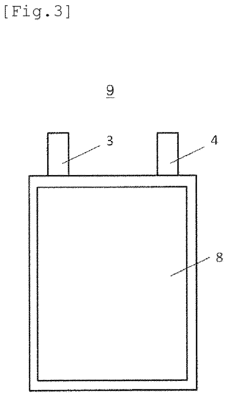

FIG. 2 is an exploded perspective view for schematically illustrating the laminated non-aqueous electrolyte secondary battery 9, and FIG. 3 is an appearance plan view for schematically illustrating the laminated non-aqueous electrolyte secondary battery 9. The battery comprises: the positive electrode terminal 3; the negative electrode terminal 4; the electrode group 6; a case-side laminated film 7; and a cap-side laminated film 8.

### [C. Organosulfur Active Material]

Next, an organosulfur active material of the present invention is described. The organosulfur active material of the present invention is an organosulfur active material characterized in that the material is used for production of an electrode comprising a porous metal collector as a collector. The contents of such organosulfur active material may be set to the same contents as those described in the [A-2. Organosulfur Active Material] section, and hence description herein is omitted.

The contents of the porous metal collector in which the organosulfur active material of the present invention is used may be set to the same contents as those described in the [A-1. Collector] section, and hence description herein is omitted.

The application of the organosulfur active material of the present invention may be an application in which the organosulfur active material of the present invention is used as an electrode active material of the electrode comprising the porous metal collector as the collector and is used for forming the electrode, and is preferably an application of forming a positive electrode of a non-aqueous electrolyte secondary battery or an application of forming a negative electrode of the non-aqueous electrolyte secondary battery. Of those, an application of forming a positive electrode of an alkali metal ion secondary battery or an application of forming a negative electrode of the alkali metal ion secondary battery is preferred, and an application of forming a positive electrode of a lithium ion secondary battery or an application of forming a negative electrode of the lithium ion secondary battery is particularly preferred. This is because, even when the mass per unit area of the organosulfur active material is increased in order to increase the charge-discharge capacity of the electrode, a non-aqueous electrolyte secondary battery having excellent cycle characteristics can be provided by using the organosulfur active material of the present invention as the electrode active material of the electrode comprising the porous metal collector as the collector. In particular, in the lithium ion secondary battery using lithium metal foil as the negative electrode, the thickness of the lithium metal foil can be reduced in the case where the organosulfur active material of the present invention is used for forming the positive electrode of the lithium ion secondary battery as compared to the case where the organosulfur active material is used for forming the collector of the metal foil, though the mass per unit area of the organosulfur active material of the positive electrode is increased.

### <Others>

In this disclosure, the following aspects are given.
[1] An electrode for a non-aqueous electrolyte secondary battery, comprising:
   a collector containing a porous metal; and
   an organosulfur active material.
[2] The electrode for a non-aqueous electrolyte secondary battery according to the above-mentioned item [1], wherein the porous metal contains aluminum.
[3] The electrode for a non-aqueous electrolyte secondary battery according to the above-mentioned item [1] or [2], wherein the collector containing the porous metal has a void ratio of from 80% to 99%.
[4] The electrode for a non-aqueous electrolyte secondary battery according to any one of the above-mentioned items [1] to [3], wherein an average inner diameter of pores of the collector containing a porous metal is from 50 µm to 1,000 µm.
[5] The electrode for a non-aqueous electrolyte secondary battery according to any one of the above-mentioned items [1] to [4], wherein the organosulfur electrode active material is sulfur-modified polyacrylonitrile.
[6] The electrode for a non-aqueous electrolyte secondary battery according to any one of the above-mentioned items [1] to [5], wherein the organosulfur active material has a mass per unit area of from 15 mg/cm² to 50 mg/cm².
[7] A non-aqueous electrolyte secondary battery, comprising:
   a positive electrode consisting of the electrode for a non-aqueous electrolyte secondary battery of any one of the above-mentioned items [1] to [6];
   a negative electrode containing a negative electrode active material; and
   a non-aqueous electrolyte.
[8] The non-aqueous electrolyte secondary battery according to the above-mentioned item [7], wherein the negative electrode active material of the negative electrode contains a lithium-based metal.
[9] The non-aqueous electrolyte secondary battery according to the above-mentioned item [7], wherein the negative electrode consists of lithium-based metal foil.
[10] A non-aqueous electrolyte secondary battery, comprising:
   a positive electrode containing a positive electrode active material;
   a negative electrode consisting of the electrode for a non-aqueous electrolyte secondary battery of any one of the above-mentioned items [1] to [6]; and
   a non-aqueous electrolyte.
[11] An organosulfur active material for producing an electrode for a non-aqueous electrolyte secondary battery comprising a collector containing a porous metal.
[12] The organosulfur active material according to the above-mentioned item [11], wherein the organosulfur active material is sulfur-modified polyacrylonitrile.

### Examples

Now, the present invention is described in more detail by way of Examples and Comparative Examples. However, the present invention is not limited to Examples and the like below. "Part(s)" and "%" in Examples are by mass unless otherwise specified. In addition, a sulfur content was calculated from analysis results using a CHN analyzer capable of analyzing sulfur and oxygen.

### [Production Example 1]

Sulfur-modified polyacrylonitrile was produced by a method in conformity with Production Examples of JP 2013-054957 A. Specifically, 20 g of the raw material PAN mixture was loaded in a bottomed cylindrical glass tube having an outer diameter of 45 mm and a length of 120 mm, and a silicone plug comprising a gas introduction tube and a gas discharge tube was then installed in an opening of the glass tube. After the air in the inside of the glass tube was replaced with nitrogen, a lower portion of the glass tube was placed in a crucible-type electric furnace, and heated at 400°C for 1.5 hours while hydrogen sulfide to be generated was removed by introducing nitrogen from the gas introduction tube. A sulfur vapor is refluxed by being condensed at an upper portion or a lid portion of the glass tube. The resultant intermediate product was heated at 260°C for 20 hours at normal pressure under a nitrogen gas stream, to thereby remove sulfur therefrom. The resultant sulfur-modified product was pulverized with a ball mill for 30 hours, and was then classified with a sieve. Thus, an organosulfur active material A1 (sulfur-modified polyacrylonitrile) having an average particle diameter of 10 um was obtained. A sulfur content of A1 is 48 mass%.

### [Production Example 2]

90 Parts by mass of the organosulfur active material A1 serving as an active material, 5.0 parts by mass of acetylene black (manufactured by Denka Company Limited) serving as a conductive assistant, and 3.0 parts by mass (solid content) of a styrene-butadiene rubber (40 mass% aqueous dispersion, manufactured by Zeon Corporation) and 2.0 parts by mass of sodium carboxymethylcellulose (manufactured by Daicel Fine Chem Ltd.) serving as binders were added to 130 parts by mass of water, and the materials were mixed with a rotation-revolution mixer under the conditions of a revolution speed of 1,600 rpm and a rotation speed of 640 rpm for 30 minutes to prepare a slurry B1.

### [Production Example 3]

50 Parts by mass of sulfur powder (manufactured by Sigma-Aldrich, average particle diameter: 200 um) and 50 parts by mass of KETJEN BLACK (manufactured by Lion Specialty Chemicals Co., Ltd.) were mixed, and the mixture was heated at 155°C for 1 hour under a nitrogen gas stream. Thus, a sulfur-KETJEN BLACK composite (SKB) was obtained. 90 Parts by mass of the SKB serving as an active material, 5.0 parts by mass of acetylene black (manufactured by Denka Company Limited) serving as a conductive assistant, and 3.0 parts by mass (solid content) of a styrene-butadiene rubber (40 mass% aqueous dispersion, manufactured by Zeon Corporation) and 2.0 parts by mass of sodium carboxymethylcellulose (manufactured by Daicel Fine Chem Ltd.) serving as binders were added to water, and the materials were mixed with a rotation-revolution mixer under the conditions of a revolution speed of 1,600 rpm and a rotation speed of 640 rpm for 30 minutes to prepare a slurry B2.

### [Example 1]

An aluminum porous metal collector (manufactured by Sumitomo Electric Industries, Ltd., product name: ALUMINUM-CELMET) having a thickness of 1 mm, a void ratio of 96%, and an average inner diameter of 550 um was immersed in the slurry B1, and then the porous metal collector was pulled up, and was left at rest at 80°C for 1 hour to be dried. The dried porous metal collector was subjected to press molding to a thickness of 570 um, and was cut into a predetermined size. The resultant was further dried in a vacuum at 150°C for 5 hours immediately before its use. Thus, an electrode of Example 1 having a mass per unit area of the organosulfur active material of 25 mg/cm² (50 mg/cm² for both the surfaces) was produced.

### [Comparative Example 1]

The same operations as those in Example 1 were performed except that the slurry B1 in Example 1 was changed to the slurry B2. Thus, an electrode of Comparative Example 1 having a mass per unit area of the SKB of 25 mg/cm² (50 mg/cm² for both the surfaces) was produced.

### [Comparative Example 2]

Carbon-coated aluminum foil having a thickness of 15 um was used as a collector, and the slurry B1 was applied onto both the surfaces of the collector using a comma coating method by adjusting the application amount of the slurry so that the mass per unit area of the organosulfur active material became 5.0 mg/cm² (10 mg/cm² for both the surfaces), and was left at rest at 80°C for 1 hour to be dried. After that, the resultant was subjected to press molding, and was cut into a predetermined size, and was further dried in a vacuum at 150°C for 5 hours immediately before its use. Thus, an electrode of Comparative Example 2 was produced.

### [Comparative Example 3]

The same operations as those in Comparative Example 2 were performed except that the application amount of the slurry B1 in Comparative Example 2 was adjusted so that the mass per unit area of the organosulfur active material became 7.5 mg/cm² (15 mg/cm² for both the surfaces). Thus, an electrode of Comparative Example 3 was produced.

### [Comparative Example 4]

The same operations as those in Comparative Example 2 were performed except that the application amount of the slurry B1 in Comparative Example 2 was adjusted so that the mass per unit area of the organosulfur active material became 10 mg/cm² (20 mg/cm² for both the surfaces). Thus, an electrode of Comparative Example 4 was produced.

### [Evaluation]

Evaluations of the electrode active material, the collector, and appearance of the mass per unit area used in each of Example 1 and Comparative Examples 1 to 4 are shown in the following Table 1. The electrode of Comparative Example 4 was not used in the subsequent tests because a fine crack was observed on a surface thereof. The fact that a crack occurred on the surface of the electrode in the case of the collector of metal foil by increasing the mass per unit area shows that it is difficult to increase the mass per unit area in the collector of the metal foil to a comparable level to that in the porous metal collector.

**Table 1**

| | Electrode active material | Collector | Mass per unit area (mg/cm2) |
|---|---|---|---|
| Example 1 | A1 | Porous metal collector | 25 |
| Comparative Example 1 | SKB | Porous metal collector | 25 |
| Comparative Example 2 | A1 | Aluminum foil | 5.0 |
| Comparative Example 3 | A1 | Aluminum foil | 7.5 |
| Comparative Example 4 | A1 | Aluminum foil | 10 |

### [Preparation of Liquid Electrolyte]

A liquid electrolyte E1 using a carbonate-based solvent and a liquid electrolyte E2 using an ether-based solvent were prepared by a method as described below. Of those, only the liquid electrolyte E2 was used in the electrode of Comparative Example 1. The reason therefor is as described below.

SKB serving as the electrode active material of Comparative Example 1 does not contain a sulfur crystal, but it is known that a lithium polysulfide (Li₂Sₓ) which is generated through a reaction with a lithium ion chemically reacts with the carbonate-based solvent to cause charge-discharge failure. Meanwhile, lithium polysulfide elutes in the ether-based solvent but does not chemically react therewith, and hence charging and discharging are enabled. Accordingly, only the liquid electrolyte E2 using the ether-based solvent was used in the electrode of Comparative Example 1.

### [Liquid Electrolyte E1]

LiPF₆ was dissolved in a mixed solvent consisting of 50 vol% of ethylene carbonate and 50 vol% of diethyl carbonate so that a concentration became 1.0 ml/L. Thus, a liquid electrolyte E1 was prepared.

### [Liquid Electrolyte E2]

LiN(CF₃SO₂)₂ was dissolved in a mixed solvent consisting of 50 vol% of dioxolane and 50 vol% of dimethoxyethane so that a concentration became 1.0 ml/L, and 1 wt% of LiNO₃ was added thereto. Thus, a liquid electrolyte E2 was prepared.

The masses per unit areas of the electrodes of Example 1 and Comparative Examples 1 to 3 are not identical to each other, and hence each of the electrodes was predoped with lithium by the following method before being used for a test. The liquid electrolyte E1 was used for each of the electrodes of Example 1 and Comparative Examples 2 and 3 each using the electrode active material A1, and the liquid electrolyte E2 was used for the electrode of Comparative Example 1 using the electrode active material SKB.

### [Predoping Method]

An electrode to be predoped was adopted as a positive electrode and lithium metal foil (thickness: 500 um) was adopted as a negative electrode. Both sides of the positive electrode were interposed between the negative electrodes via a separator made of polypropylene having a microporous membrane (manufactured by Celgard, LLC, thickness: 15 um, product name: "Celgard 2325"), and a positive electrode terminal and a negative electrode terminal were arranged on the positive electrode and the negative electrode, respectively. The resultant was housed in a case consisting of a laminated film, and the liquid electrolyte was injected thereinto, and then the case was sealed. After that, the case was loaded into a thermostat at 25°C, and the positive electrode was subjected to predoping by performing discharging once at a discharge final voltage of 1.0 V under the condition of a discharge rate of 0.1C. After the predoping, the positive electrode was taken out, washed with dimethyl carbonate, and naturally dried. Thus, a predoped electrode was prepared.

Laminated non-aqueous electrolyte secondary batteries of Examples 2 to 4 and Comparative Examples 5 to 9 were each produced by using the predoped electrode as a positive electrode and lithium metal foil having a thickness of 50 um or 300 um as a negative electrode, and using the liquid electrolyte E1 or E2, in the combination shown in Table 2. The laminated non-aqueous electrolyte secondary battery is as illustrated in schematic views of FIG. 1 to FIG. 3, and was produced as follows: the electrode group 6 obtained by laminating the positive electrode 1 having the positive electrode terminal 3 arranged thereon and the negative electrode 2 having the negative electrode terminal 4 arranged thereon via the separator 5 and the liquid electrolyte were housed in a case consisting of the case-side laminated film 7 and the cap-side laminated film 8; the liquid electrolyte was injected thereinto; and then the case was sealed. As the amount of the liquid electrolyte, an amount of 1.2 times as large as the sum of a void volume of the positive electrode and a void volume of the separator was used.

A weight energy density and cycle characteristics of the battery were evaluated by the following methods using the non-aqueous electrolyte secondary batteries of Examples 2 to 4 and Comparative Examples 5 to 9. The results are shown in Table 2.

### [Energy Density]

Each of the non-aqueous electrolyte secondary batteries was loaded into a thermostat at 25°C, and was subjected to a charge-discharge test 5 consecutive times at a charge final voltage of 3.0 V and a discharge final voltage of 1.0 V under the conditions of a charge rate of 0.05C and a discharge rate of 0.05C. Thus, the discharge capacities of the battery were measured. The weight energy density of the non-aqueous electrolyte secondary battery was determined from the following formula from the fifth discharge capacity, the fifth discharge voltage, and the weight of the non-aqueous electrolyte secondary battery. A higher weight energy density shows a higher possibility that a secondary battery having a light weight and a high charge-discharge capacity can be produced. Weight energy density (Wh/kg)=fifth discharge capacity (Ah)×fifth discharge voltage (V)/weight (kg) of battery

### [Cycle Characteristics]

Each of the non-aqueous electrolyte secondary batteries having been subjected to the charge-discharge test five times was loaded into a thermostat at 25°C, and was subjected to a charge-discharge test 50 consecutive times under the conditions of a charge rate of 0.1C and a discharge rate of 0.1C. Thus, the discharge capacities of the battery were measured. In the charge-discharge tests performed a total of 55 times, the ratio of the fifty-fifth discharge capacity to the seventh discharge capacity was defined as a cycle capacity retention rate (%). A higher cycle capacity retention rate shows that the cycle characteristics are more excellent.

**Table 2**

| | Positive electrode | Thickness of negative electrode (µm) | Liquid electrolyte | Weight energy density (Wh/kg) | Cycle capacity retention rate (%) |
|---|---|---|---|---|---|
| Example 2 | Example 1 | 300 | E1 | 451 | 88 |
| Example 3 | Example 1 | 50 | E1 | 505 | 86 |
| Example 4 | Example 1 | 50 | E2 | 515 | 82 |
| Comparative Example 5 | Comparative Example 1 | 300 | E2 | 372 | 60 |
| Comparative Example 6 | Comparative Example 1 | 50 | E2 | 410 | 32 |
| Comparative Example 7 | Comparative Example 2 | 300 | E1 | 290 | 81 |
| Comparative Example 8 | Comparative Example 3 | 300 | E1 | 341 | 73 |
| Comparative Example 9 | Comparative Example 3 | 50 | E1 | 412 | 65 |

In the secondary battery of each of Examples 2 to 4 comprising the electrode of the present invention as a positive electrode, a higher weight energy density and a higher cycle capacity retention rate than those of the secondary battery of each of Comparative Examples are obtained. The results of Example 4 and Comparative Example 6, in which the same liquid electrolyte is used, are significantly different from each other owing to a difference in the electrode active material, though the same collector of the electrode and the same mass per unit area of the electrode active material are used. It is conceived that the results of: Examples 2 and 3; and Comparative Examples 7 to 9, in which the same electrode active material and the same liquid electrolyte are used, are significantly different from each other owing to a difference between the porous metal collector and the metal foil collector, and a difference in the mass per unit area of the electrode active material.

In Comparative Example 8, the weight energy density is higher than that in Comparative Example 7, but the cycle capacity retention rate is lower than that in Comparative Example 7. This is presumably because the mass per unit area of the electrode active material of the electrode of Comparative Example 3 used in Comparative Example 8 was larger than that of the electrode of Comparative Example 2 used in Comparative Example 7, and hence the charge-discharge capacity was increased, and the weight energy density was in turn increased, but the thickness of the electrode mixture layer was increased, and thus strain of the electrode active material owing to a change in volume along with charging and discharging became larger, with the result that the cycle characteristics were reduced.

In order to increase the weight energy density, it is effective to reduce the weight of the battery, and also in Examples of the present invention, the weight energy density is increased by reducing the thickness of the negative electrode from 300 um to 50 um. However, in the secondary batteries of Comparative Examples 5 and 6, and 8 and 9, the cycle capacity retention rate is reduced and the cycle characteristics are deteriorated by reducing the thickness of the negative electrode. In contrast, in the secondary batteries of Examples 2 and 3, the cycle capacity retention rates are substantially comparable to each other even when the thickness of the negative electrode is changed from 300 um to 50 um. That is, it is shown that, when the lithium ion secondary battery comprising the lithium-based metal foil as the negative electrode further comprises the electrode of the present invention as the positive electrode, the following is achieved as compared to the case where the lithium ion secondary battery further comprises the electrode of the metal foil collector using an organosulfur active material as the positive electrode: the charge-discharge capacity of the positive electrode is increased, and the weight energy density is in turn increased; and besides, the thickness of the lithium-based metal foil of the negative electrode can be reduced while satisfactory cycle characteristics are maintained, and thus the weight energy density is further increased.

A secondary battery having a higher weight energy density shows that the battery has a higher charge-discharge capacity than a secondary battery having a lower weight energy density when the weights of the batteries are comparable to each other, and shows that the battery has a lighter weight than the secondary battery having a lower weight energy density when the charge-discharge capacities of the batteries are comparable to each other.

### Reference Signs List

- 1: positive electrode
- 2: negative electrode
- 3: positive electrode terminal
- 4: negative electrode terminal
- 5: separator
- 6: electrode group
- 7: case-side laminated film
- 8: cap-side laminated film
- 9: laminated non-aqueous electrolyte secondary battery

## Claims

1. An electrode for a non-aqueous electrolyte secondary battery, comprising:
a collector containing a porous metal; and
an organosulfur active material.

2. The electrode for a non-aqueous electrolyte secondary battery according to claim 1, wherein the porous metal contains aluminum.

3. The electrode for a non-aqueous electrolyte secondary battery according to claim 1, wherein the collector containing the porous metal has a void ratio of from 80% to 99%.

4. The electrode for a non-aqueous electrolyte secondary battery according to claim 1, wherein an average inner diameter of pores of the collector containing a porous metal is from 50 um to 1,000 um.

5. The electrode for a non-aqueous electrolyte secondary battery according to claim 1, wherein the organosulfur active material is sulfur-modified polyacrylonitrile.

6. The electrode for a non-aqueous electrolyte secondary battery according to claim 1, wherein the organosulfur active material has a mass per unit area of from 15 mg/cm² to 50 mg/cm².

7. A non-aqueous electrolyte secondary battery, comprising:
a positive electrode consisting of the electrode for a non-aqueous electrolyte secondary battery of any one of claims 1 to 6;
a negative electrode containing a negative electrode active material; and
a non-aqueous electrolyte.

8. The non-aqueous electrolyte secondary battery according to claim 7, wherein the negative electrode active material of the negative electrode contains a lithium-based metal.

9. The non-aqueous electrolyte secondary battery according to claim 7, wherein the negative electrode consists of lithium-based metal foil.

10. A non-aqueous electrolyte secondary battery, comprising:
a positive electrode containing a positive electrode active material;
a negative electrode consisting of the electrode for a non-aqueous electrolyte secondary battery of any one of claims 1 to 6; and
a non-aqueous electrolyte.

11. An organosulfur active material for producing an electrode for a non-aqueous electrolyte secondary battery comprising a collector containing a porous metal.

12. The organosulfur active material according to claim 11, wherein the organosulfur active material is sulfur-modified polyacrylonitrile.
